# EUROPEAN PATENT SPECIFICATION

(11) **EP 4 197 742 B1**
(45) Date of publication and mention of the grant of the patent: **03.09.2025**
(21) Application number: 21306781.2
(22) Date of filing: 15.12.2021
(51) Int. Cl.: B29C 64/118, B29C 64/245, B29C 64/393, B33Y 10/00, B33Y 40/10, B33Y 50/02, B33Y 70/00, B33Y 80/00

(54) **MANUFACTURING OF HIGHLY TRANSPARENT WAFERS USING FDM 3D PRINTING**
HERSTELLUNG HOCHTRANSPARENTER WAFERS MITTELS FDM 3D-DRUCK
FABRICATION DE PLAQUETTES HAUTEMENT TRANSPARENTES PAR IMPRESSION 3D FDM

(43) Date of publication of application: 21.06.2023
(73) Proprietor: Essilor International, 94220 Charenton-le-Pont (FR)
(72) Inventor: SHAN, Haifeng, SHREWSBURY, 01545 (US)
(74) Representative: Cabinet Novitech

(56) References cited:
- WO-A1-2020/064375
- WO-A1-2020/064754
- WO-A1-2020/205565
- US-A1- 2013 297 320
- US-A1- 2016 200 043
- US-A1- 2016 257 067
- US-A1- 2018 297 272
- US-B2- 10 780 654

## Description

### FIELD

The present disclosure relates to a method for fabricating a transparent wafer using Fused Deposition Modeling 3D printing and post processing.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

FDM (Fused Deposition Modeling), also called FFF (Fused Filament Fabrication), is an additive manufacturing technology that produces an object by extruding polymer in an amorphous state through nozzle(s) to form layers as the polymer material hardens after extrusion.
The patent document WO 2020/205565 A1 describes a process for forming an extrusion additive (3D) acrylic article.
The patent document WO 2020/064375 A1 discloses a Fused Modelling Deposition (FDM) method for manufacturing a 3D (printed) item.
The patent document US 2016/200043 A1 describes an apparatus for manufacturing a bioscaffold. The patent document US 2016/257067 A1 describes a method for manufacturing a three-dimensional article.
The patent document US 2018/297272 A1 describes a method of printing an object.

Aspects of the disclosure may address some of the above-described shortcomings in the art, particularly with the solutions set forth in the claims.

### SUMMARY

The present disclosure relates to a fused filament fabrication 3D printing method for fabricating an optical wafer according to claim 1.

Note that this summary section does not specify every feature and/or incrementally novel aspect of the present disclosure or claimed invention. Instead, this summary only provides a preliminary discussion of different embodiments and corresponding points of novelty. For additional details and/or possible perspectives of the embodiments, the reader is directed to the Detailed Description section and corresponding figures of the present disclosure as further discussed below.

### BRIEF DESCRIPTION OF THE DRAWINGS

Various embodiments of this disclosure that are proposed as examples will be described in detail with reference to the following figures, wherein:
FIG. 1 is a schematic of fused deposition modeling (FDM), also called fused filament fabrication (FFF).
FIG. 2 is a schematic of a temperature gradient during a FDM 3D printing process, within the scope of the present disclosure.
FIG. 3A and FIG. 3B are schematics of different optical wafers, within the scope of the present disclosure.
FIG. 4 is a schematic of an FDM 3D printing process for an optical wafer, within the scope of the present disclosure.
FIG. 5 is a schematic of issues that can occur during printing of the optical wafer, within the scope of the present disclosure.
FIG. 6 is a schematic of the relationships between various wafer fabrication challenges, useful within the scope of the present disclosure.
FIG. 7 is a snapshot of printing parameters for adjusting quality results, useful within the scope of the present disclosure.
FIG. 8 is a schematic of the wafer print profile design, useful within the scope of the present disclosure.
FIG. 9A is a printed wafer with a straight or parallel line pattern, useful within the scope of the present disclosure.
FIG. 9B is a printed wafer with a grid pattern, useful within the scope of the present disclosure.
FIG. 9C is a printed wafer with a spiral pattern, useful within the scope of the present disclosure.
FIG. 10 is an optical image of printing defects, useful within the scope of the present disclosure.
FIG. 11 is a cross-sectional microscopy image of printing defects, useful within the scope of the present disclosure.
FIG. 12 is a schematic of void formation inside the wafer and surface printing lines, useful within the scope of the present disclosure.
FIG. 13A is an optical image of an optical wafer printed using optimized printing parameters, useful within the scope of the present disclosure.
FIG. 13B is an optical image of an optical wafer cross-section printed using optimized printing parameters, useful within the scope of the present disclosure.
FIG. 14A is an optical image of a printed optical wafer's top layer or surface, useful within the scope of the present disclosure.
FIG. 14B is an optical image of a printed optical wafer's bottom layer or surface, useful within the scope of the present disclosure.
FIG. 15A is an optical image of a printed wafer with a coating, useful within the scope of the present disclosure.
FIG. 15B is an optical image of printed wafer without a coating, useful within the scope of the present disclosure.
FIG. 16 is a microscopy image and cross-sectional profile of a printed optical wafer, useful within the scope of the present disclosure.
FIG. 17 is an exemplary flow chart for a method of forming a lens, useful within the scope of the present disclosure.

### DETAILED DESCRIPTION

The following disclosure provides many different variations, or examples, for implementing different features of the provided subject matter. Specific examples of components and arrangements are described below to simplify the present disclosure. These are, of course, merely examples and are not intended to be limiting nor inoperable together in any permutation. Unless indicated otherwise, the features and embodiments described herein are operable together in any permutation. For example, the formation of a first feature over or on a second feature in the description that follows may include embodiments in which the first and second features are formed in direct contact, and may also include embodiments in which additional features may be formed between the first and second features, such that the first and second features may not be in direct contact.

In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "top," "bottom," "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. Inventive apparatuses may be otherwise oriented (rotated 90 degrees or at other orientations) and the spatially relative descriptors used herein may likewise be interpreted accordingly.

The order of discussion of the different steps as described herein has been presented for clarity sake. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

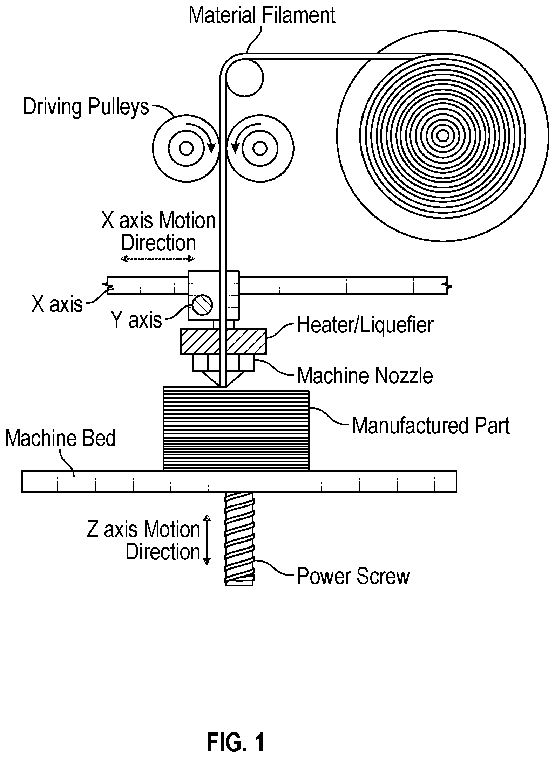

FIG. 1 is a schematic of fused deposition modeling (FDM), also called fused filament fabrication (FFF). As illustrated in Fig. 1, one or more polymer filaments, such as thermoplastic filaments, can be pulled by driving pulleys and fed into a heated nozzle heated to a predetermined nozzle temperature, inside which the polymer is melted and extruded onto a building plate at a predetermined location to form strands on the building plate. For example, the thermoplastic can be polycarbonate (PC), alicyclic polycarbonate copolymer, poly(methyl methacrylate) (PMMA), poly(methyl methacrylimide) (PMMI), polyamide (PA), polyester, copolyester, polysulfone (PSU), cellulose triacetate (TAC), thermoplastic polyurethane (TPU), or cyclic olefin copolymer (COC), among others.

The nozzle can include a heating element to melt the polymer, or the nozzle can be heated itself. The nozzle can then be translated in the same plane (a first base layer), or through multiple planes (a second layer, a third layer, etc.), along an X-Y axis direction or plane that is parallel to a plane of the building plate. The nozzle can be translated at a predetermined printing speed. The heated strands of the polymer can be deposited side by side at specified layer thickness. A material of the building plate can be glass or metal, and the building plate can be heated to a predetermined plate temperature.

Once a first layer of the strands is deposited and completed, the building plate can be lowered (or the nozzle can be raised) along a Z axis direction (or the nozzle is raised along the Z axis direction) and 2nd layer is then deposited. These steps can be repeated until a part is finished. The heated strands can be fused or welded together when the strands are still in an amorphous or tacky state at or above a glass transition temperature of the polymer, and then cooled below the glass transition temperature to form a solid. Printing can be performed on an open platform or inside an enclosed chamber or partially enclosed shroud, which can be heated to a predetermined temperature. The additional heating from the chamber or shroud can help maintain a desired temperature while printing, especially as the part increases in layers away from the heated building plate. After printing is completed, parts can be cooled down under ambient condition and removed from building plate.

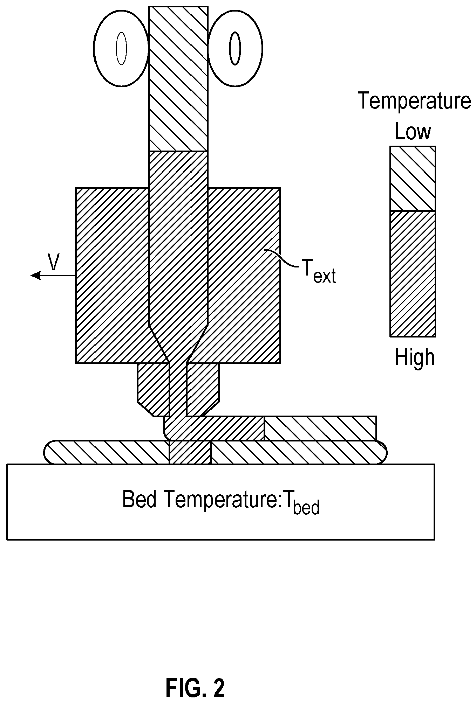

FIG. 2 is a schematic of a temperature gradient during a FDM 3D printing process, useful within the scope of the present disclosure. In a useful scope, the FDM 3D printing process may be non-isothermal, as it may be performed in an open environment and with poor temperature control. Temperature gradients exist in many locations, such as: 1) from nozzle to building plate; 2) from extruded amorphous/molten filament to solidified filaments/layers; 3) from an interior of the fabricated part to an exterior of the part; and 4) from the part to its surround area, among others. The part can also receive low force/pressure during printing, which can be generated by the nozzle that is being pushed against the building plate, in order to reach a target layer thickness. Upon exiting the nozzle, the polymer melt can meet the previously deposited layer and immediately begin to cool and solidify. As previously described, a heated chamber or shroud can help improve temperature control around the part and reduce the temperature gradient intensity.

Notably, the rapid cooling can prevent the layers from fully fusing, which often leads to voids, poor dimension accuracy, and weak mechanical strength. Parts can be weaker in the vertical, z-direction due to a weak interlayer bond strength, resulting in an anisotropic property, which can cause part warpage. Part surface quality can also be poor, with defects such as layer seams, blobs, printing lines, etc.

Described herein, a method to fabricate lenses via FDM provides a solution to known lens defects, including: 1) internal defects such as voids, printing lines, blobs, black specks; 2) poor dimension accuracy, and poor dimension stability such as warpage; 3) rough surface topology.

Due to the above issues, it may be a challenge to manufacture an optical article, which requires 1) high clarity, as indicated by: low haze, high visible light transmission, neutral color, minimal black speck, high surface smoothness; 2) accurate dimension of thickness, diameter, radius and minimal warpage; and 3) minimal surface roughness.

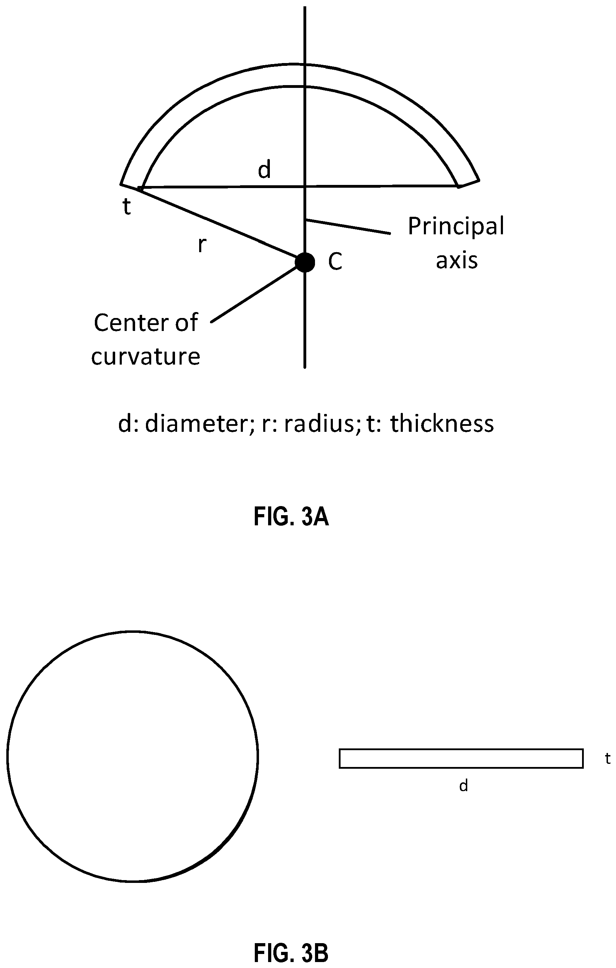

FIG. 3A and FIG. 3B are schematics of different optical wafers, useful within the scope of the present disclosure. An optical wafer can be defined as a thin and round part with high clarity. It can be curved (FIG. 3A) or flat (FIG. 3B). A thin and flat wafer was used as an example in the present disclosure, but it may be appreciated that a curved wafer can be fabricated similarly. The wafer described herein can have a 75 mm diameter and 1.0 mm thickness. Wafers having different diameters, thicknesses, and optics powers can also be produced using the same processes and methods.

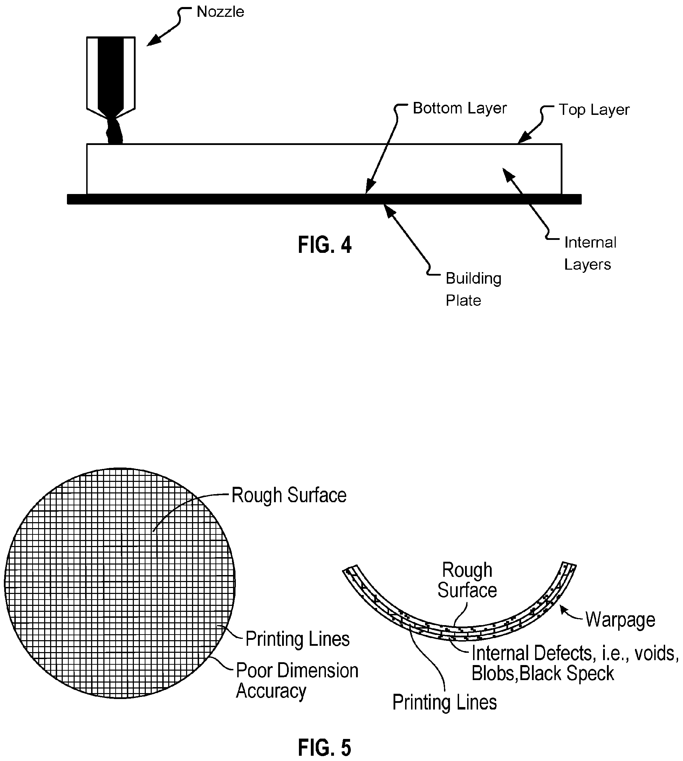

FIG. 4 is a schematic of an FDM 3D printing process for an optical wafer, useful within the scope of the present disclosure. In a useful scope, the printing can start from a first (base) layer adjacent to the substrate, and printed line by line and layer by layer. The nozzle can be heated to melt the filament and can have a predetermined diameter to control a thickness of each layer. The building plate can be heated to promote a certain adhesion force between the building plate and the first layer of the wafer to avoid wafer movement during printing. Thus, the fabricated wafer can be divided into 3 parts: the first (base or bottom) layer, internal layers, and a final (top) layer.

FIG. 5 is a schematic of issues that can occur during printing of the optical wafer, useful within the scope of the present disclosure. In a useful scope, the printed wafer can include defects, such as a rough surface, distinct printing lines, poor dimensional accuracy, warpage, and internal defects. The internal defects can include voids, blobs, and ocular occlusions, such as opaque specks, dust, and shards.

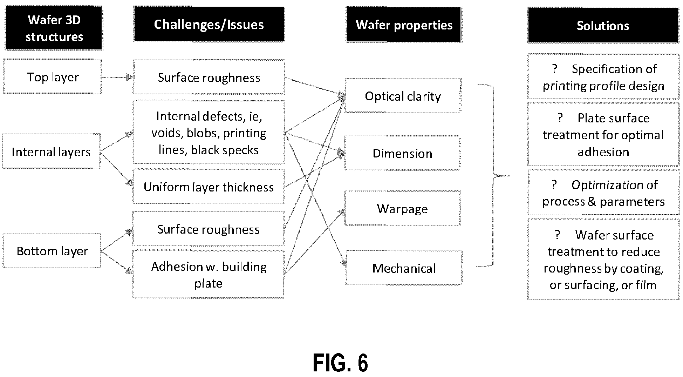

FIG. 6 is a schematic of the relationships between various wafer fabrication challenges, useful within the scope of the present disclosure. In a useful scope, the structure of the optical wafer includes the 3 parts, each of which include respective challenges or issues during fabrication and affect the resulting wafer properties. For example, surface roughness in the top layer and/or the bottom layer can cause optical clarity issues for the resulting optical wafer. For example, the internal defects occurring in the internal layers can cause i) optical clarity issues, ii) dimensional accuracy, and iii) mechanical degradation for the resulting optical wafer. For example, nonuniform layer thickness occurring in the internal layers can cause mechanical degradation for the resulting optical wafer. For example, poor adhesion between the bottom layer and the building plate can cause i) optical clarity issues and ii) warpage for the resulting optical wafer.

In a useful scope, the part can be fabricated layer by layer via the FDM 3D printing process using a 3D model. To produce 3D models, a computer-aided design (CAD) file can be used to plot the drawing of the part. This CAD file can then be converted into the standard triangulation language (STL) format, which is then sliced into thin vertical layers. Detailed printing parameters can be set up after on how to print each layer, such as pattern, speed, line width, layer thickness, etc. Depending on the 3D printing machine and the software used, some can have hundreds of parameters.

Thus, it can be important to specify optimal printing profiles for optical wafers as the first step to best actualize potential 3D printing advantages and avoid any possible issues due to poor printing design. After a printing profile design is specified, more printing parameters can be added and evaluated.

In a useful scope, the adhesion between the building plate and the wafer can be optimized. A level of adhesion between the building plate and wafer can be important for reducing printing issues. If adhesion is too weak, the part can move during printing, or the part can warp if there is not enough force to hold the part to the building plate due to temperature gradient inside the part, especially along the Z-direction. Conversely, if adhesion is too strong, the part may not be easily removed from the building plate after printing, or the bottom layer adjacent to the building plate can peel off during removal and thus deteriorate the bottom surface. This is important as a very thin bottom layer may be needed to achieve high surface quality. This thin layer can be easily peeled off if adhesion is too strong. Adhesion can be affected by many factors, such as 1) plate material; 2) filament material; 3) plate temperature; and 4) filament temperature, among others.

Some solutions are available for maintain strong adhesion between the building plate and the part, such as: 1) adhesive paper, which can be glued on the building plate and has good adhesion with a 3D printed part. However, the adhesion level may be too strong for optical wafers, which might peel off the bottom layers, or the high adhesion may leave some undesirable textures on the bottom layer of the wafer due to its rough surface. 2) The adhesive can also be applied on the building plate to increase adhesion. However, the adhesive may smudge the building plate surface, and thus leave marks and/or stains on the wafer surface. This is especially an issue for optical surfaces.

Described herein, several solvents were screened, and acetone was determined to be the optimal solvent for promoting adhesion of the wafer to the building plate. The screening included a method including wiping the building plate surface for a predetermined length of time to reach an optimal adhesion level so the wafer can be fixed during printing and removed after part is cooled down, without peeling the bottom layer off. Other surface treatments, such as plasma, corona, can also be used.

In a useful scope, parameters of the 3D printing process can be optimized. As previously described, fabrication of a part or wafer can result in: 1) poor bottom surface quality, 2) internal defects, such as voids, blobs, printing lines, black specks, etc., and 3) dimension accuracy and dimension stability such as warpage. The detailed results are described herein. For example, it was determined that bottom layer thickness can affect bottom surface quality. Various layer thicknesses were evaluated, and it was determined that a very thin layer thickness, such as 0.04 mm to 0.06 mm, is needed to achieve a high glossy surface due to minimal visible printing lines produced by very thin layers. However, to print very thin layers, other factors, such as nozzle diameter, line width, nozzle temperature and plate temperature also needed to be evaluated, as they can determine how the thin layers can be printed.

In a useful scope, treatment of the wafer surface can be optimized. The top surface quality can be poor due to some defects from FDM 3D printing, such as printing lines, blobs, etc. These defects can be difficult to be remove by FDM 3D printing only, such as via printing with a thin line width to produce a thin layer. Therefore, a coating is applied to improve surface smoothness. A refractive index of the coating is the same as the polymer for the part. For example, a refractive index of 1.59 can be used if polycarbonate (PC) is used as the polymer. The bottom surface quality can be mainly affected by the building plate surface quality and the bottom layer thickness. A high glossy surface can be achieved using a high glossy building plate, such as a glass plate, nickel plated stainless steel plate, or chrome plated plate, and printing with a thin layer thickness.

In a useful scope, one layer in the part can be printed using a first predetermined pattern, then the subsequent printed layer can be printed using a second predetermined pattern. The first predetermined pattern can be printed using the predetermined printing speed. Notably, the second predetermined pattern can be printed using the predetermined printing speed or a second, different predetermined printing speed. Similarly, the predetermined plate temperature can be adjusted or kept the same between printed layers.

### EXAMPLES

### Example 1 - Experimental setup for FDM 3D printing

3D filament preparation: an optical grade PC resin was used as raw material for the 3D filament, which was extruded using a Filabot Ex6 extruder having a diameter of 2.85 mm with tolerance of 0.05 mm. The extruded filament was inspected under microscopy and no defects and contamination was observed, such as shark skin, black speck, dust, or white swirls.

FDM 3D printer: an Ultimaker S5 3D printer was used. Its major specifications are listed in Table 1. Ultimaker Cura software was used to prepare the 3D printing. The software has 392 parameters under 12 settings, as shown in Table 2.

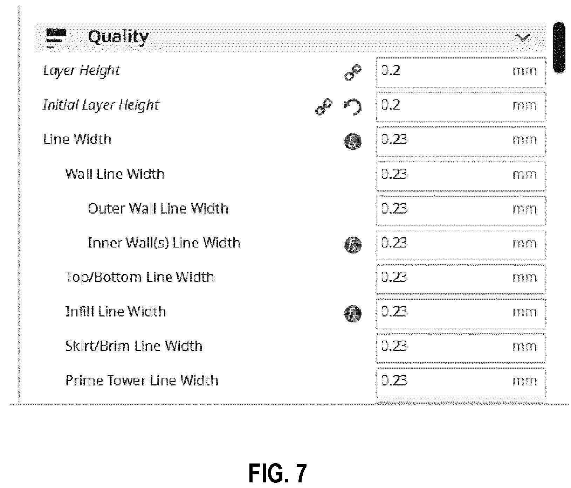

FIG. 7 is a snapshot of printing parameters for adjusting quality results, useful within the scope of the present disclosure. As shown, some parameters include layer height/thickness, first layer height/thickness, and line width, among others. It may be appreciated that other 3D printers can also be used, such as a Lulzbot TAZ6, PartPro300 Xt, Markforged Mark 2, Rize one, Stratasys F series, or Fusion3 F410.

**Table 1 - Main specifications of Ultimaker S5**

| **Parameter** | **Value** |
|---|---|
| Nozzle diameter | 0.25 mm, 0.4 mm, 0.6 mm, 0.8 mm |
| Nozzle temperature | 180-280 °C |
| Layer resolution | 0.25 mm nozzle: 60-150 µm; |
| | 0.4 mm nozzle: 20-200 µm; |
| | 0.6 mm nozzle: 20-300 µm; |
| | 0.8 mm nozzle: 20-600 µm |
| Building plate | Glass build plate |
| Build plate temperature | 20-140 °C |
| Build speed | < 24 mm³/s |

**Table 2 - List of settings and parameters in Ultimaker Cura**

| **Quality** | **Speed** | **Material** | **Shell** |
|---|---|---|---|
| 15*: Layer height, Line width,.. | 60*: Print speed/acceleration | 43*: Printing temp., Plate temp. | 53*: Wall/Top/Bottom thickness, pattern |

| **Travel** | **Dual extrusion** | **Infill** | **Build plate adh.** |
|---|---|---|---|
| 24*: Retraction distance/speed | 15*: Prime tower, Ooze shield | 33*: Density, Pattern,... | 43*: Skirt, Brim, Raft... |

| **Mesh Fixes** | **Support** | **Cooling** | **Special modes** |
|---|---|---|---|
| 11*: Stitching, Removal. | 70*: Structure, Pattern, Density. | 11*: Fan speed, ... | 14*: Mesh, Mold |

### Example 2 - Specification of printing profile design

As previously described, an initial step of 3D printing is to design the printing profile. The printing profile refers to how the part will be placed on building plate, the printing path and pattern, etc. Table 3 lists the main design elements that can be considered.

**Table 3 - Printing profile design**

| Design | Value |
|---|---|
| Wafer placement orientation | Vertical, Horizontal |
| Printing pattern | Straight line, Circle, Zig Zag |
| Print line orientation between layers | Parallel, Perpendicular, Tilt |

Wafer placement orientation: the optical wafer can be laid either horizontally with its flat surface on the building plate, or vertically with its thin edge on the building plate. The former option is used for optical wafer printing, as the part is more stable, there is less warpage, and there is less surface roughness due to layer seams, also called Z-seams.

Printing pattern: the printing pattern can be determined by how filament strands are laid. A straight line pattern was chosen, as it will generate the least surface texture and roughness compared to circle and zig-zag patterns. A wall was thus also designed, which can hold the wafer during printing to prevent wafer delamination from the building plate, as the straight line pattern can create an asymmetric pattern.

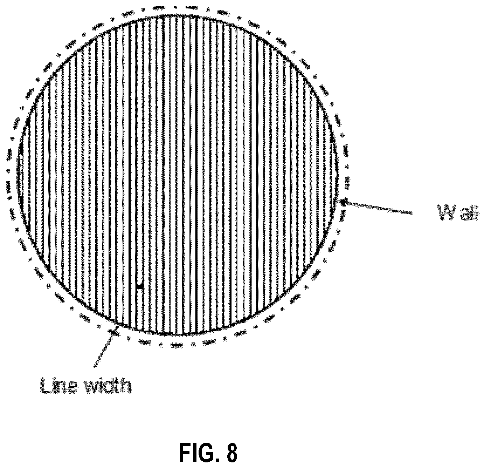

Print line orientation between layers: the line direction between two adjacent layers can be parallel, perpendicular, or at an angle. FIG. 8 is a schematic of the wafer print profile design, useful within the scope of the present disclosure. The parallel orientation shown can be used, as it generates the least grids, and thus, the least haziness.

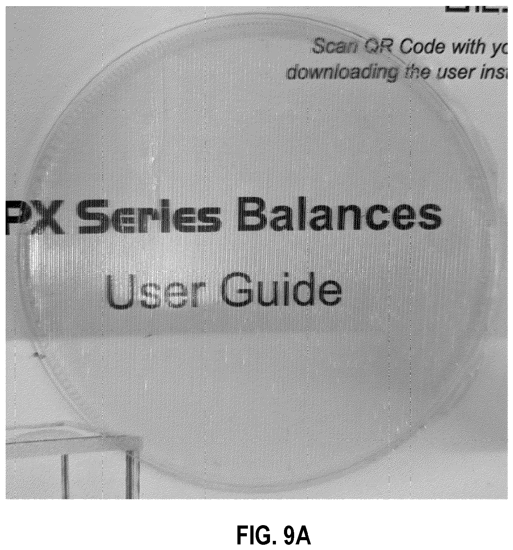

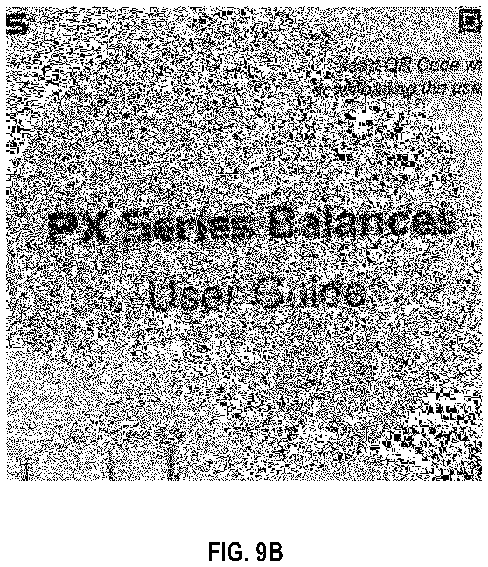

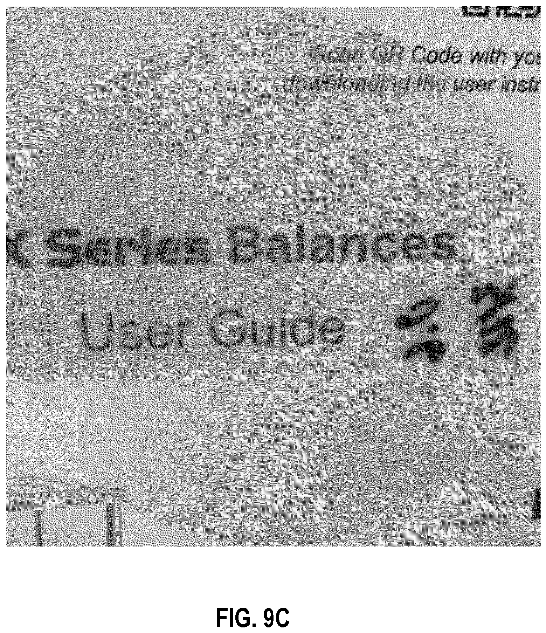

FIG. 9A is a printed wafer with a straight or parallel line pattern, useful within the scope of the present disclosure. FIG. 9B is a printed wafer with a grid pattern, useful within the scope of the present disclosure. FIG. 9C is a printed wafer with a spiral pattern, useful within the scope of the present disclosure. As shown, the straight line pattern (FIG. 9A) has much higher clarity than the grid pattern (FIG. 9B) or the spiral pattern (FIG. 9C).

### Example 3 - Optimization of adhesion between building plate and wafer by surface treatment

As previously described, the building plate surface can be treated in order to achieve optimal adhesion strength with the part or wafer. Several solvents, such as isopropyl alcohol (IPA), acetone, methanol, methyl ethyl ketone, and A1100 were tested. The solvents were sprayed onto a cloth, which was then wiped against the building plate surface for less than 3 minutes. The wafer was printed after surface treatment. Results are shown in Table 4. It may be appreciated that other chemicals, and other surface treatment methods, such as plasma and corona, can also be tested for use with FDM 3D printing.

**Table 4 - Results of plate surface treatment**

| **Solvent** | **Adhesion Strength** | **Results** |
|---|---|---|
| IPA | Weaker | Wafer movable during printing |
| Acetone | Optimal | Wafer stable during printing, and removed with no layer peeling during part removal |
| Methanol | Weaker | Wafer movable during printing |
| A1100 | Stronger | Bottom layer peeled off during part removal |

Several factors can contribute to adhesion strength between the building plate and the wafer: 1) building plate surface tension, 2) building plate surface polarity, 3) building plate chemistry, i.e., glass, chrome, stainless steel, aluminum, etc., and 3) solvent compatibility with filament material, as there might be faint residue left on the building plate after wiping. In this case, the solvent should have good compatibility with the PC, and that is why acetone and A1100 can provide stronger adhesion than IPA and methanol.

### Example 4 - Optimization of 3D printing process and parameters

As previously described, the 3D printing process and parameters can be optimized in order to produce an optical wafer with 1) high clarity, 2) high dimension accuracy and stability, and 3) high surface smoothness. Over 300 parameters as listed in the Cura software were screened, and major printing parameters were identified, which are listed in Table 4. These parameters were further tested at different values, which generated numerous combinations of printing conditions. A general tendency of improving wafer quality by adjusting each parameter is summarized in Table 5.

**Table 4 - Major printing parameters for FDM 3D printing**

| **Parameter** | **Value** | | |
|---|---|---|---|
| Nozzle diameter (mm) | 0.25 | 0.4 | 0.8 |
| Line width (mm) | 0.22 | 0.35 | 0.7 |
| Layer height (mm) | 0.1, 0.04 | 0.2, 0.1, 0.04 | 0.4, 0.2 |
| Printing temperature (°C) | 240-285 | | |
| Plate temperature (°C) | 100-140 | | |
| Printing speed (mm/s) | 10-70 | | |
| Nozzle numbers | Single, Dual | | |

**Table 5 - General tendency of improving wafer quality by adjusting each parameter**

| **Part structure** | **Defect/Issue** | **Reasons** | **Parameter adjustment to reduce defects/issues** (↓: decrease; ↑: increase; ↔: minimal impact) | | | | | |
|---|---|---|---|---|---|---|---|---|
| | | | **Layer height** | **Initial layer height** | **Line width** | **Melt temp.** | **Plate temp.** | **Printing speed** |
| Internal layers | Blobs | Unstable flow, vary filament diameter, oozing | ↓ | NA | ↓ | ↓ | ↓ | ↓ |
| | Voids | Fila frozen too fast, poor inter layer adhesion | ↓ | NA | ↑ | ↑ | ↑ | ↓ |
| Top surface (layer) | Blobs | Unstable flow, vary filament diameter, oozing | ↓ | NA | ↓ | ↓ | NA | ↓ |
| | Print lines | Frozen filament | ↓ | NA | ↑ | ↑ | NA | ↔ |
| Bottom surface (layer) | Print lines | Frozen filament | NA | ↓ | ↑ | ↑ | ↑ | ↔ |
| | Surface peel | Adhesion to plate too strong | NA | ↑ | ↑ | ↓ | ↓ | ↓ |

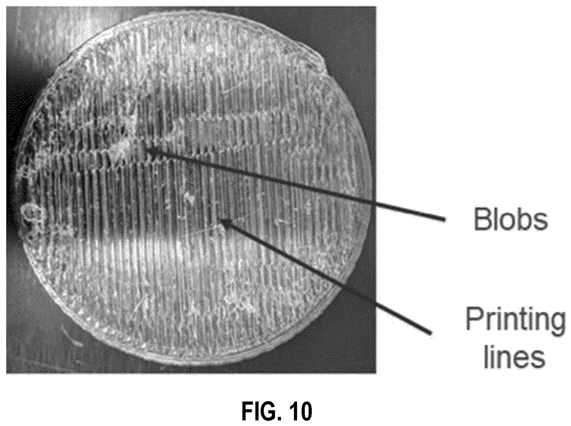

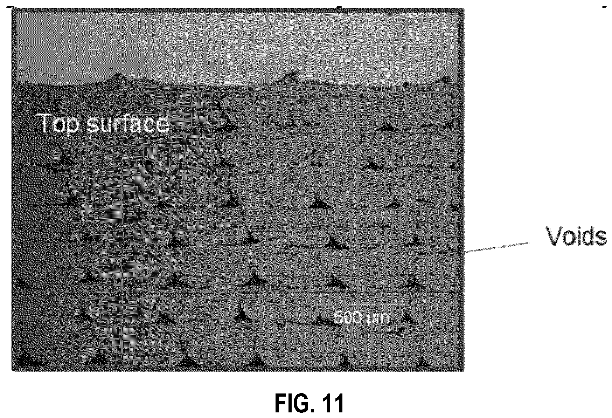

FIG. 10 is an optical image of printing defects, useful within the scope of the present disclosure. FIG. 11 is a cross-sectional microscopy image of printing defects, useful within the scope of the present disclosure. Some examples of impact from different line width settings on defects such as blobs and printing lines, and layer height on voids, are shown in FIG. 10 and FIG. 11. Black speck defects can be avoided if nozzle temperature is below a predetermined temperature, such as below 330°C.

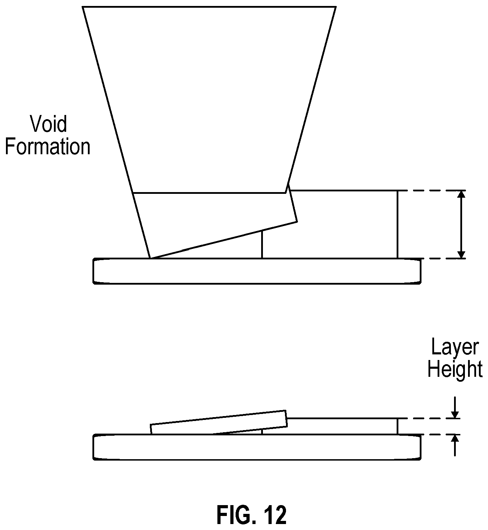

FIG. 12 is a schematic of void formation inside the wafer and surface printing lines, useful within the scope of the present disclosure. Generally, the filament was extruded and printed as overlapping between lines to increase adhesion between the layers. Voids will form if the layer height is above predetermined threshold, such as 0.2 mm if a 0.4 mm nozzle is used. Such voids will disappear if the layer height is less than 0.1 mm since gaps between two adjacent layers become smaller. That is, the extruded strands on the new layer can more closely nestle into the depression between strands on the previous layer. The printing pressure also becomes higher because the nozzle is pushed more to achieve thin layer thicknesses.

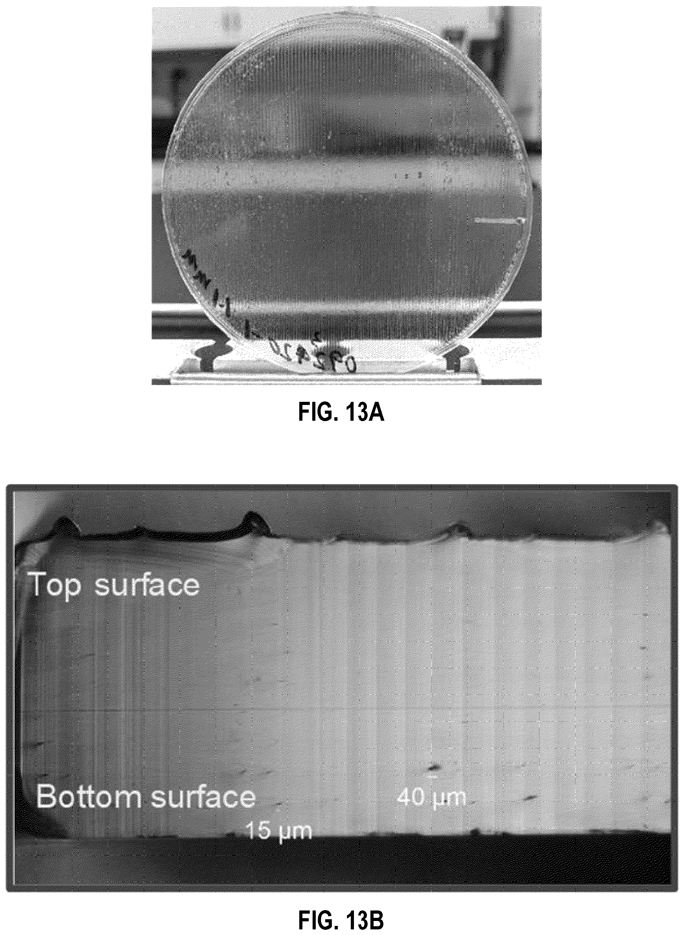

FIG. 13A is an optical image of an optical wafer printed using optimized printing parameters, useful within the scope of the present disclosure. FIG. 13B is an optical image of an optical wafer cross-section printed using optimized printing parameters, useful within the scope of the present disclosure. The FDM 3D printing process was optimized and able to produce a wafer with 1) high glossy bottom surface, 2) minimal voids, blobs, printing lines, and black specks, and 3) high dimension accuracy with no warpage, as shown in FIG. 13A. A range for each parameter is also listed, considering PC with different melt flow indices (MFI) and different FDM 3D printers. Their impacts on wafer quality were also described in Table 6.

**Table 6 - Optimized FDM 3D printing processing parameters**

| **Processing parameter** | **Value** | **Range** | **Impact on wafer quality** |
|---|---|---|---|
| Nozzle diameter | 0.4 mm | 0.2-0.6 mm | Too big: blobs, oozing, printing lines |
| | | | Too small: poor adhesion, surface scratching |
| Nozzle temperature | 285 °C | 260-310 °C | Too high: oozing, material degradation, black speck |
| | | | Too low: poor adhesion, unstable flow |
| Plate temperature | 140 °C | 100-160 °C | Too high: adhesion with plate too strong, wafer surface too soft |
| | | | Too low: adhesion with plate too weak, wafer warpage |
| Initial layer height | 0.04 mm | 0.02-0.1 mm | Too high: rough bottom surface |
| | | | Too low: poor adhesion with plate |
| Layer height | 0.06 mm | 0.04-0.1 mm | Too high: voids inside wafer |
| | | | Too low: poor adhesion between layers |
| Printing speed | 10-30 mm/s | 10-200 mm/s | Too high: blobs |
| | | | Too low: poor adhesion |

As listed, a range of the nozzle diameter can be between 0.1 to 1.0 mm, or 0.3 to 0.6 mm, or 0.4 to 0.5 mm. A temperature range of the predetermined plate temperature of the building plate can be between 100°C to 160°C, or between 30°C lower than a glass transition temperature of the thermoplastic and 20°C higher than the glass transition temperature of the thermoplastic. A temperature range of the predetermined nozzle temperature can be between 280°C to 290°C, or at least 100°C higher than the glass transition temperature of the thermoplastic, and at least 50°C lower than a degradation temperature (according to ASTM E2550-17) of the thermoplastic. A cross-sectional shape of the nozzle and thus the filament is circular, square, or rectangular. A range of the thickness of the first (initial) layer can be between 0.02 mm and 0.1 mm, or 0.04 mm to 0.06 mm. A range of the predetermined printing speed can be between 1 mm/s to 100 mm/s, or 5 mm/s to 30 mm/s. A range of the thickness of each additional layer on the base layer can be 0.04 mm to 0.2 mm, or 0.06 mm to 0.1 mm.

### Example 5 - Wafer surface treatment

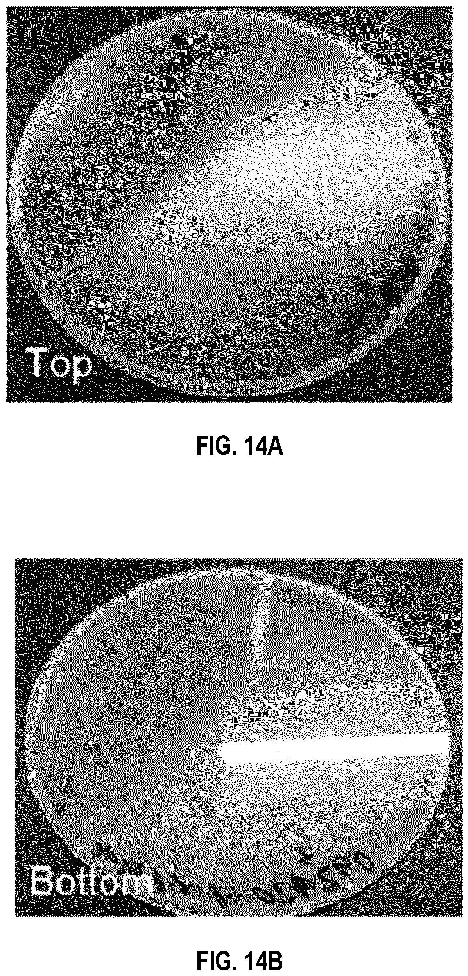

FIG. 14A is an optical image of a printed optical wafer's top layer or surface, useful within the scope of the present disclosure. FIG. 14B is an optical image of a printed optical wafer's bottom layer or surface, useful within the scope of the present disclosure.

Top surface: As shown in FIG. 14A, the top surface of the printed wafer is still rough due to the printing lines. The printing lines can be reduced by certain printing process, such as ironing, which uses a hot nozzle to press the wafer surface. Additional surface treatment methods can be applied to reduce printing lines and thus increase surface smoothness, such as 1) coating, 2) surfacing, 3) film lamination, 4) thermoforming, and 5) compression molding.

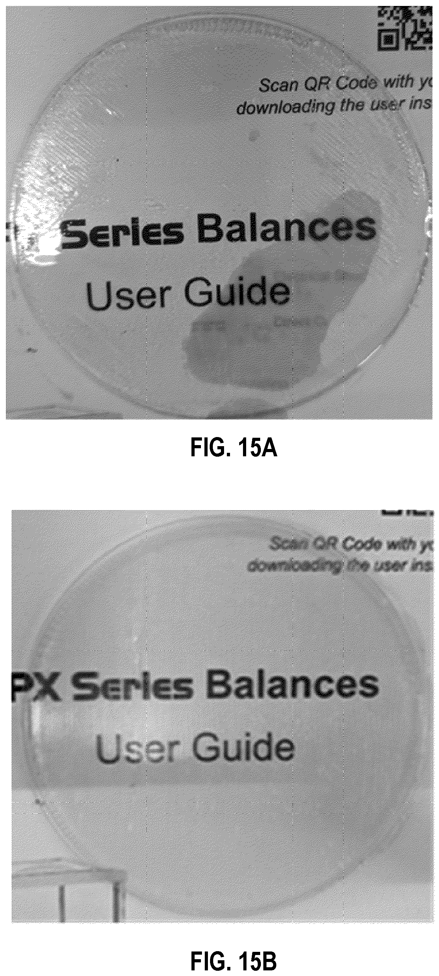

FIG. 15A is an optical image of a printed wafer with a coating, useful within the scope of the present disclosure. FIG. 15B is an optical image of printed wafer without a coating, useful within the scope of the present disclosure. Initial tests by coating were performed by spin coating a UV curable adhesive, such as NOA60 (Norland Products Inc, NJ), which has RI of 1.56. Thus, the coated wafer is shown in FIG. 15A. Further improvement can be made by mixing of NOA160 (RI: 1.60) and NOA60 (1.56), which has an RI of 1.585, which is the same as that of PC.

Bottom surface: As shown in FIG. 14, the bottom surface of the printed wafer has a high glossy surface. This was achieved by using, 1) a glass building plate, which has surface smoothness at optical quality, and 2) a very thin layer thickness, i.e., 40 µm.

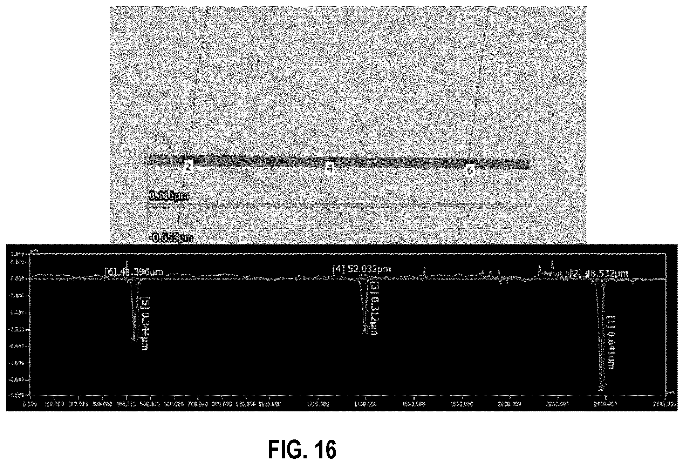

FIG. 16 is a microscopy image and cross-sectional profile of a printed optical wafer, useful within the scope of the present disclosure. The surface produced has very faint printing lines, at a magnitude of approximately 0.5 µm, which are almost invisible to human eyes, as shown in FIG. 16.

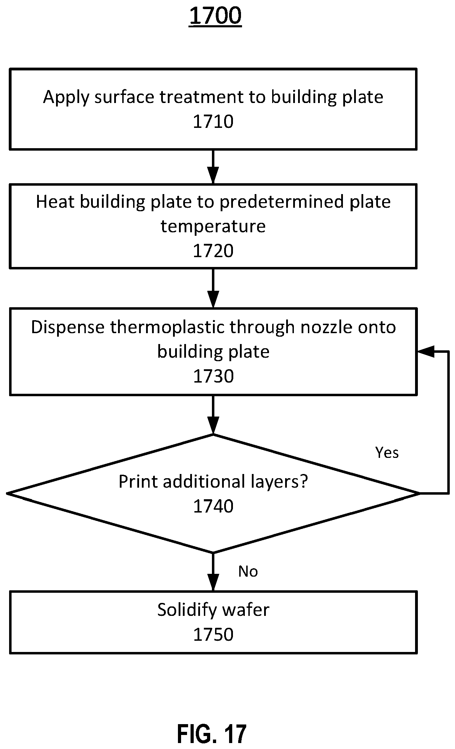

FIG. 17 is an exemplary flow chart for a method 1700 of fabricating an optical article, useful within the scope of the present disclosure. In step 1710, a surface treatment is applied to the building plate. In step 1720, the building plate is heated to a predetermined plate temperature. In step 1730, a thermoplastic is dispensed through the nozzle, the nozzle being heated to a predetermined nozzle temperature. The nozzle or the building plate is translated according to a first predetermined pattern at a predetermined printing speed to form a first layer. In step 1740, additional layers can be printed. In step 1750, the printed part or wafer is cooled and solidified.

In the preceding description, specific details have been set forth, such as a particular geometry of a processing system and descriptions of various components and processes used therein. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than specifically described unless expressly indicated otherwise. Various additional operations may be performed and/or described operations may be omitted.

Those skilled in the art will also understand that there can be many variations made to the operations of the techniques explained above while still achieving the same objectives of the disclosure. Such variations are intended to be covered by the scope of this disclosure. As such, the foregoing descriptions of embodiments are not intended to be limiting. Rather, any limitations to embodiments are presented in the following claims.

## Claims

1. A fused filament fabrication 3D printing method for fabricating an optical wafer, comprising:
applying a surface treatment to a building plate;
heating the building plate to a predetermined plate temperature, wherein a range of the predetermined plate temperature is between 30°C lower than a glass transition temperature of the thermoplastic and 20°C higher than the glass transition temperature of the thermoplastic;
dispensing a thermoplastic through a nozzle set at a predetermined nozzle temperature onto the building plate while translating the nozzle or the building plate according to a first predetermined pattern at a predetermined printing speed to form a first layer; and
solidifying the first layer, wherein a range of the predetermined nozzle temperature is at least 100 °C higher than the glass transition temperature of the thermoplastic, and at least 50 °C lower than a degradation temperature of the thermoplastic,
if a printed part is not finished, repeating the dispensing step until the printed part is finished; and
applying a coating to the printed part top surface for improving surface smoothness and the refractive index of the coating is the same as the thermoplastic for the printed part.

2. The method of claim 1, wherein the first predetermined pattern is a parallel linear line pattern, a circular pattern, or a spiral pattern.

3. The method of claim 1, wherein a diameter of the nozzle is between 0.1 mm to 1.0 mm.

4. The method of claim 1, wherein a cross-sectional shape of the nozzle is circular, square, or rectangular.

5. The method of claim 1, wherein a range of a thickness of the first layer is 0.02 mm to 0.1 mm.

6. The method of claim 1, wherein a range of the predetermined printing speed is 1 mm/s to 100 mm/s.

7. The method of claim 1, wherein a material of the thermoplastic is polycarbonate (PC), alicyclic polycarbonate copolymer, poly(methyl methacrylate) (PMMA), poly(methyl methacrylimide) (PMMI), polyamide (PA), polyester, copolyester, polysulfone (PSU), cellulose triacetate (TAC), thermoplastic polyurethane (TPU), or cyclic olefin copolymer (COC).

8. The method of claim 1, wherein the surface treatment includes application of a solvent, a plasma, or a corona to a surface of the building plate.

9. The method of claim 8, wherein the solvent is acetone, isopropyl alcohol, methanol, or methyl ethyl ketone.

10. The method of claim 1, wherein a material of the building plate is glass, chrome plated stainless steel, nickel plated stainless steel, or nickel.

11. The method of claim 1, wherein the dispensing the thermoplastic through the nozzle to form the first layer further comprises repeating the dispensing the thermoplastic through the nozzle set at the predetermined nozzle temperature onto the building plate while translating the nozzle according to a second predetermined pattern at the predetermined printing speed to form at least one additional layer.

12. The method of claim 11, wherein the second predetermined pattern is the same as the first predetermined pattern with a predetermined offset to dispense the thermoplastic in voids formed between lines of the first predetermined pattern and no grids are formed between the lines of the first predetermined pattern and lines of the second predetermined pattern.

13. The method of claim 11, wherein a range of a thickness of each additional layer of the at least one additional layer is 0.04 mm to 0.2 mm.

14. The method of claim 11, further comprising applying a surface smoothing process to a surface of the first layer.

15. The method of claim 14, wherein the surface smoothing process is application of a coating material, mechanical surfacing, film lamination, thermoforming, or compression molding.

## Patentansprüche

1. 3D-Druckverfahren zur Fertigung von Schmelzfilament zur Fertigung eines optischen Wafers, umfassend:
Anwenden einer Oberflächenbehandlung auf eine Bauplatte;
Erwärmen der Bauplatte auf eine vorbestimmte Plattentemperatur, wobei ein Bereich der vorbestimmten Plattentemperatur zwischen 30 °C unter einer Glasübergangstemperatur des Thermoplasten und 20 °C über der Glasübergangstemperatur des Thermoplasten liegt;
Abgeben eines Thermoplasten durch eine Düse, die auf eine vorbestimmten Düsentemperatur eingestellt ist, auf die Bauplatte, während die Düse oder die Bauplatte gemäß einem ersten vorbestimmten Muster mit einer vorbestimmten Druckgeschwindigkeit translatiert wird, um eine erste Schicht zu bilden; und
Verfestigen der ersten Schicht, wobei ein Bereich der vorbestimmten Düsentemperatur mindestens 100 °C über der Glasübergangstemperatur des Thermoplasten und mindestens 50 °C unter einer Zersetzungstemperatur des Thermoplasten liegt,
falls ein gedrucktes Teil nicht fertig ist, Wiederholen des Abgabeschritts, bis das gedruckte Teil fertig ist; und
Aufbringen einer Beschichtung auf die oberste Oberfläche des gedruckten Teils, um Oberflächenglätte zu verbessern, und wobei der Brechungsindex der Beschichtung der gleiche wie derjenige des Thermoplasten für das gedruckte Teil ist.

2. Verfahren nach Anspruch 1, wobei das erste vorbestimmte Muster ein paralleles lineares Linienmuster, ein kreisförmiges Muster oder ein Spiralmuster ist.

3. Verfahren nach Anspruch 1, wobei ein Durchmesser der Düse zwischen 0,1 mm und 1,0 mm liegt.

4. Verfahren nach Anspruch 1, wobei eine Querschnittsform der Düse kreisförmig, quadratisch oder rechteckig ist.

5. Verfahren nach Anspruch 1, wobei ein Bereich einer Dicke der ersten Schicht 0,02 mm bis 0,1 mm beträgt.

6. Verfahren nach Anspruch 1, wobei ein Bereich der vorbestimmten Druckgeschwindigkeit 1 mm/s bis 100 mm/s beträgt

7. Verfahren nach Anspruch 1, wobei ein Material des Thermoplasten Polycarbonat (PC), alicyclisches Polycarbonatcopolymer, Poly(methylmethacrylat) (PMMA), Poly(methylmethacrylimid) (PMMI), Polyamid (PA), Polyester, Copolyester, Polysulfon (PSU), Cellulosetriacetat (TAC), thermoplastisches Polyurethan (TPU) oder cyclisches Olefincopolymer (COC) ist.

8. Verfahren nach Anspruch 1, wobei die Oberflächenbehandlung Anwenden eines Lösungsmittels, eines Plasmas oder einer Korona auf eine Oberfläche der Bauplatte einschließt.

9. Verfahren nach Anspruch 8, wobei das Lösungsmittel Aceton, Isopropylalkohol, Methanol oder Methylethylketon ist.

10. Verfahren nach Anspruch 1, wobei ein Material der Bauplatte Glas, verchromter rostfreier Stahl, vernickelter rostfreier Stahl oder Nickel ist.

11. Verfahren nach Anspruch 1, wobei das Abgeben des Thermoplasten durch die Düse zum Bilden der ersten Schicht ferner Wiederholen des Abgebens des Thermoplasten durch die Düse, die auf die vorbestimmte Düsentemperatur eingestellt ist, auf die Bauplatte umfasst, während die Düse gemäß einem zweiten vorbestimmten Muster mit der vorbestimmten Druckgeschwindigkeit translatiert wird, um mindestens eine zusätzliche Schicht zu bilden.

12. Verfahren nach Anspruch 11, wobei das zweite vorbestimmte Muster dasselbe wie das erste vorbestimmte Muster mit einem vorbestimmten Versatz ist, um den Thermoplasten in Hohlräume abzugeben, die zwischen Linien des ersten vorbestimmten Musters gebildet sind, und wobei keine Gitter zwischen den Linien des ersten vorbestimmten Musters und Linien des zweiten vorbestimmten Musters gebildet werden.

13. Verfahren nach Anspruch 11, wobei ein Bereich einer Dicke jeder zusätzlichen Schicht der mindestens einen zusätzlichen Schicht 0,04 mm bis 0,2 mm beträgt.

14. Verfahren nach Anspruch 11, ferner umfassend Anwenden eines Oberflächenglättungsprozesses auf eine Oberfläche der ersten Schicht.

15. Verfahren nach Anspruch 14, wobei der Oberflächenglättungsprozess Aufbringen eines Beschichtungsmaterials, Anwenden von mechanischer Oberflächenbearbeitung, Filmlaminierung, Thermoformen oder Formpressen ist.

## Revendications

1. Procédé d'impression 3D par dépôt de filament fondu destiné à fabriquer une plaquette optique, comprenant :
l'application d'un traitement de surface à une plaque de construction ;
le chauffage de la plaque de construction jusqu'à une température de plaque prédéterminée, une plage de la température de plaque prédéterminée se situant entre 30 °C de moins qu'une température de transition vitreuse du thermoplastique et 20 °C de plus que la température de transition vitreuse du thermoplastique ;
la distribution d'un thermoplastique à travers un jeu de buses à une température de buse prédéterminée sur la plaque de construction simultanément à la translation de la buse ou de la plaque de construction selon un premier motif prédéterminé à une vitesse d'impression prédéterminée pour former une première couche ; et
la solidification de la première couche, une plage de la température de buse prédéterminée étant supérieure d'au moins 100 °C à la température de transition vitreuse du thermoplastique, et inférieure d'au moins 50 °C à une température de dégradation du thermoplastique ;
si une pièce imprimée n'est pas finie, la répétition de l'étape de distribution jusqu'à ce que la pièce imprimée soit finie ; et
l'application d'un revêtement à la surface supérieure de la pièce imprimée pour améliorer le lissé de surface et pour que l'indice de réfraction du revêtement soit le même que celui du thermoplastique pour la pièce imprimée.

2. Procédé selon la revendication 1, dans lequel le premier motif prédéterminé est un motif de lignes linéaires parallèles, un motif circulaire, ou un motif en spirale.

3. Procédé selon la revendication 1, dans lequel un diamètre de la buse se situe entre 0,1 mm et 1,0 mm.

4. Procédé selon la revendication 1, dans lequel une forme en coupe transversale de la buse est circulaire, carrée, ou rectangulaire.

5. Procédé selon la revendication 1, dans lequel une plage d'épaisseur de la première couche va de 0,02 mm à 0,1 mm.

6. Procédé selon la revendication 1, dans lequel une plage de la vitesse d'impression prédéterminée va de 1 mm/s à 100 mm/s.

7. Procédé selon la revendication 1, dans lequel un matériau du thermoplastique est le polycarbonate (PC), un copolymère de polycarbonate alicyclique, le poly(méthacrylate de méthyle) (PMMA), le poly(méthylméthacrylimide) (PMMI), le polyamide (PA), le polyester, le copolyester, la polysulfone (PSU), le triacétate de cellulose (TAC), le polyuréthane thermoplastique (TPU), ou un copolymère oléfinique cyclique (COC).

8. Procédé selon la revendication 1, dans lequel le traitement de surface comporte l'application d'un solvant, d'un plasma ou d'une décharge corona à une surface de la plaque de construction.

9. Procédé selon la revendication 8, dans lequel le solvant est l'acétone, l'alcool isopropylique, le méthanol, ou la méthyléthylcétone.

10. Procédé selon la revendication 1, dans lequel un matériau de la plaque de construction est le verre, l'acier inoxydable chromé, l'acier inoxydable nickelé, ou le nickel.

11. Procédé selon la revendication 1, dans lequel la distribution du thermoplastique à travers la buse pour former la première couche comprend en outre la répétition de la distribution du thermoplastique à travers le jeu de buses à la température de buse prédéterminée sur la plaque de construction simultanément à la translation de la buse selon un deuxième motif prédéterminé à la vitesse d'impression prédéterminée pour former au moins une couche supplémentaire.

12. Procédé selon la revendication 11, dans lequel le deuxième motif prédéterminé est identique au premier motif prédéterminé avec un décalage prédéterminé pour distribuer le thermoplastique dans des vides formés entre lignes du premier motif prédéterminé et aucune grille n'est formée entre les lignes du premier motif prédéterminé et les lignes du deuxième motif prédéterminé.

13. Procédé selon la revendication 11, dans lequel une plage d'épaisseur de chaque couche supplémentaire parmi l'au moins une couche supplémentaire va de 0,04 mm à 0,2 mm.

14. Procédé selon la revendication 11, comprenant en outre l'application d'un traitement de lissage de surface à une surface de la première couche.

15. Procédé selon la revendication 14, dans lequel le traitement de lissage de surface est l'application d'un matériau de revêtement, un surfaçage mécanique, une stratification de film, un thermoformage, ou un moulage par compression.
